# EUROPÄISCHE PATENTSCHRIFT

(11) **EP 4 540 111 B1**
(45) Veröffentlichungstag und Bekanntmachung des Hinweises auf die Patenterteilung: **24.06.2026**
(21) Anmeldenummer: 23728042.5
(22) Anmeldetag: 23.05.2023
(51) Int. Cl.: B60T 8/17, B60W 30/18, B60W 50/14, B60W 50/16

(54) **VORRICHTUNG UND EIN VERFAHREN ZUR BENACHRICHTIGUNG EINES FAHRERS EINES KRAFTFAHRZEUGS MIT WENIGSTENS EINEM ELEKTROMOTOR ZUM ANTREIBEN UND VERZÖGERN EINER ACHSE DES KRAFTFAHRZEUGS**
APPARATUS AND METHOD FOR INFORMING A DRIVER OF A MOTOR VEHICLE HAVING AT LEAST ONE ELECTRIC MOTOR FOR DRIVING AND DECELERATING AN AXLE OF THE MOTOR VEHICLE
APPAREIL ET PROCÉDÉ D'INFORMATION D'UN CONDUCTEUR D'UN VÉHICULE AUTOMOBILE PRÉSENTANT AU MOINS UN MOTEUR ÉLECTRIQUE DESTINÉ À ENTRAÎNER ET À DÉCÉLÉRER UN ESSIEU DU VÉHICULE AUTOMOBILE

(30) Priorität: 14.06.2022 DE 102022114926
(43) Veröffentlichungstag der Anmeldung: 23.04.2025
(73) Patentinhaber: Bayerische Motoren Werke Aktiengesellschaft, 80809 München (DE)
(72) Erfinder: HUELSMANN, Florian, 81677 München (DE); KAGE, Tobias, 84095 Furth (DE)
(86) Internationale Anmeldenummer: PCT/EP2023/063717
(87) Internationale Veröffentlichungsnummer: WO 2023/241887

(56) Entgegenhaltungen:
- EP-A1- 2 789 516
- DE-T5- 112014 006 719
- US-A1- 2008 042 489
- US-A1- 2019 077 394
- US-B1- 10 029 683

## Beschreibung

Die Erfindung betrifft eine Vorrichtung und ein Verfahren zur Benachrichtigung eines Fahrers eines Kraftfahrzeugs mit wenigstens einem Elektromotor zum Antreiben und Verzögern einer Achse des Kraftfahrzeugs.

Gegenstand der vorliegenden Erfindung sind elektrische Bremssysteme, in denen die Funktion der Betriebsbremse an wenigstens einer Fahrzeugachse vollständig durch den elektrischen Antriebsmotor dargestellt wird ("E-Motor-Betriebsbremse"), welcher bei Betätigung der Bremse durch den Fahrer ein entsprechendes Bremsmoment erzeugt. Eine beispielsweise hydraulisch betätigte Reibungsbremse nach Stand der Technik dadurch an der angetriebenen Achse entfallen.

Insbesondere bei Motorrädern mit einem solchen Bremssystem gibt es zwei verschiedene Bremsbetätigungen, in der Regel eine für die Vorderradbremse und eine für die Hinterradbremse, von denen mindestens eine Betätigung ausschließlich das Bremsmoment der E-Motor-Betriebsbremse steuert. Der elektrische Antrieb setzt die Summe aus dem über die Bremsbetätigung geforderte Bremsmomentwunsch und dem über den Gasgriff oder das Gaspedal geforderten Antriebsmomentwunsch um. Ein wesentlicher Unterschied zu einem herkömmlichen Bremssystem ergibt sich bei gleichzeitiger Betätigung von Gas und Bremse: Bei einem herkömmlichen Bremssystem würde der Antrieb dabei gegen die Bremse arbeiten, was sich in einer Verspannung des Fahrwerks äußert, welche vom Fahrer deutlich wahrgenommen wird. Bei der E-Motor-Betriebsbremse wird dagegen nur ein betragsmäßig entsprechend kleineres Brems- bzw. Antriebsmoment umgesetzt, das sich jedoch nicht anders für den Fahrer äußert, als hätte er nur weniger Gas gegeben bzw. gebremst anstatt Gas zu Bremsen gleichzeitig zu betätigen.

Eine unbeabsichtigte gleichzeitige Betätigung von Gas und Bremse kann somit leicht vom Fahrer unbemerkt bleiben, wodurch es zu kritischen Situationen kommen kann, z.B. wenn der Fahrer die Bremse löst und vom plötzlich ansteigenden Antriebsmoment überrascht wird.

Druckschriftlicher Stand der Technik im vorliegenden technischen Gebiet ist in dem Dokument US 2008/042489 A1 offenbart.

Es ist daher Aufgabe der vorliegenden Erfindung, eine Vorrichtung und ein Verfahren zur Benachrichtigung eines Fahrers eines Kraftfahrzeugs mit wenigstens einem Elektromotor zum Antreiben und Verzögern einer Achse des Kraftfahrzeugs bereitzustellen.

Diese Aufgabe wird durch die Merkmalskombination gemäß Patentanspruch 1 gelöst.

Erfindungsgemäß wird ein Verfahren zur Benachrichtigung eines Fahrers eines, insbesondere einspurigen, Kraftfahrzeugs mit wenigstens einem Elektromotor zum Antreiben und Verzögern einer Achse des Kraftfahrzeugs und einem Steuergerät zur Regelung des Elektromotors vorgeschlagen, bei welchem zunächst ein kontinuierliches Erfassen eines Verzögerungswunsches des Fahrers an der Achse mittels eines Bremselements, insbesondere eines Bremshebels, eines Beschleunigungswunsches des Fahrers an der Achse mittels eines Gasgriffs oder Gaspedals und von aktuellen Betriebsparametern mittels einer Sensorik erfolgt. Diese erfassten Daten werden an das Steuergerät übermittelt. Daraufhin wird ein Vergleichen des erfassten Verzögerungswunsches und/oder Beschleunigungswunsches und/oder der erfassten aktuellen Betriebsparameter mit in dem Steuergerät hinterlegten Grenzwerten mittels des Steuergeräts durchgeführt. Danach erfolgt ein Benachrichtigen des Fahrers bei einem Erreichen und/oder einem Überschreiten eines der Grenzwerte mittels wenigstens eines Mittels zur Benachrichtigung des Fahrers.

Vorteilhaft daran ist, dass dem Fahrer ein Feedback über den Betriebszustand seiner E-Motor-Betriebsbremse zu erhalten, wodurch potentiell kritische Fahrsituationen verhindert werden können.

Erfindungsgemäß ist vorgesehen, dass ein Grenzwert ein gleichzeitiges Betätigen des Bremselements und des Gasgriffs oder Gaspedals ist, wobei der Fahrer bei einem Erreichen des Grenzwerts mittels des wenigstens einen Mittels zur Benachrichtigung benachrichtigt wird. Auf diese Weise wird der Fahrer benachrichtigt, wenn er den Gasgriff oder das Gaspedal und das Bremselement gleichzeitig betätigt.

In einem Ausführungsbeispiel der Erfindung ist vorgesehen, dass die Sensorik eine Geschwindigkeit des Kraftfahrzeugs erfasst, wobei ein Grenzwert ein Betätigen des Bremselements und eine Geschwindigkeit des Kraftfahrzeugs größer 0 ist. Dabei wird der Fahrer bei einem Erreichen des Grenzwerts mittels des wenigstens einen Mittels zur Benachrichtigung benachrichtigt. Dadurch wird der Fahrer bei einer Betätigung der E-Motor-Betriebsbremse während der Fahrt benachrichtigt.

Ferner ist eine Ausführung günstig, bei welcher die Sensorik eine Geschwindigkeit des Kraftfahrzeugs erfasst und ein Grenzwert ein Betätigen des Bremselements und eine Geschwindigkeit des Kraftfahrzeugs von 0 ist. Dabei wird der Fahrer bei einem Erreichen des Grenzwerts mittels des wenigstens einen Mittels zur Benachrichtigung benachrichtigt. Dabei ist günstig, dass der Fahrer bei einer Betätigung der E-Motor-Betriebsbremse im Stillstand des Kraftfahrzeugs benachrichtigt wird.

In einer weiteren vorteilhaften Variante ist erfindungsgemäß vorgesehen, dass die Sensorik eine Geschwindigkeit des Kraftfahrzeugs erfasst und wobei ein Grenzwert eine Geschwindigkeit des Kraftfahrzeugs größer 0 und ein derartiges Betätigen des Bremselements ist, dass ein Eingriff eines Antiblockiersystems des Kraftfahrzeugs erfolgt. Dabei wird der Fahrer bei einem Erreichen oder einem Überschreiten des Grenzwerts mittels des wenigstens einen Mittels zur Benachrichtigung benachrichtigt. Vorteilhaft daran ist, dass eine Aktivierung der Benachrichtigung des Fahrers erfolgt, wenn eine starke Betätigung der E-Motor-Betriebsbremse, sodass die Stabilitätsfunktion ("ABS-Funktion") das Bremsmoment begrenzen/reduzieren muss, um die Fahrzeugstabilität aufrecht zu erhalten.

Das erfindungsgemäße Verfahren wird in einer Ausführungsvariante durchgeführt, dass die Sensorik eine Geschwindigkeit des Kraftfahrzeugs erfasst und ein Grenzwert eine Geschwindigkeit des Kraftfahrzeugs größer oder gleich 0 und ein derartiges Betätigen des Gasgriffs oder Gaspedals ist, dass ein Eingriff einer Antriebsschlupfregelung/dynamischen Traktionskontrolle (DTC) des Kraftfahrzeugs erfolgt. Dabei wird der Fahrer bei einem Erreichen oder einem Überschreiten des Grenzwerts mittels des wenigstens einen Mittels zur Benachrichtigung benachrichtigt. Dadurch wird der Fahrer bei bzw. vor einer durchdrehenden Antriebsachse gewarnt.

In einer alternativen Ausführung des Verfahrens ist ferner vorgesehen, dass ein Grenzwert ein vorbestimmter Betriebspunkt, insbesondere ein Betriebspunkt mit einem maximalen Wirkungsgrad, des Kraftfahrzeugs ist, welcher mittels des Steuergeräts anhand der mittels der Sensorik erfassten aktuellen Betriebsparametern ermittelt wird, und ein Betätigen des Bremselements ist. Dabei wird der Fahrer bei einem Erreichen des Grenzwerts mittels des wenigstens einen Mittels zur Benachrichtigung benachrichtigt. Auf diese Weise wird der Fahrer bei einer Betätigung der E-Motor-Betriebsbremse in/unterhalb/oberhalb eines besonderen Betriebspunkts benachrichtigt.

In einer vorteilhaften Ausführungsvariante ist vorgesehen, dass das Mittel zur Benachrichtigung des Fahrers eine Drehmomentmodulation des Elektromotors mittels des Steuergeräts ist und beim Benachrichtigen eine Schwingung und/oder Vibration des Kraftfahrzeugs erzeugt wird.

Vorzugsweise ist das Mittel zur Benachrichtigung des Fahrers ein Aktor zur Erzeugung eines haptischen Signals, insbesondere ein Vibrationsmotor oder ein Piezo-Element, welcher/s an dem Bremselement oder einem Lenkelement des Kraftfahrzeugs oder einem Sitzelement des Kraftfahrzeugs angeordnet ist, und beim Benachrichtigen wird eine Vibration des Bremselements erzeugt.

In einem Ausführungsbeispiel der Erfindung ist vorgesehen, dass das Mittel zur Benachrichtigung des Fahrers ein akustisches Signal ist, welches durch eine entsprechend Regelung des Elektromotors mittels des Steuergeräts erzeugt wird, und beim Benachrichtigen das akustische Signal erzeugt wird.

Ferner ist eine Ausführung günstig, bei welcher das Mittel zur Benachrichtigung des Fahrers ein akustisches Signal ist, welches durch einen Lautsprecher des Kraftfahrzeugs erzeugt wird, und beim Benachrichtigen das akustische Signal erzeugt wird.

In einer weiteren vorteilhaften Variante ist vorgesehen, dass das Mittel zur Benachrichtigung des Fahrers ein optisches Signal ist, welches durch eine Anzeige des Kraftfahrzeugs erzeugt wird, und beim Benachrichtigen das optische Signal erzeugt wird.

Weiter vorteilhaft ist es, wenn das Benachrichtigen mittels des wenigstens einen Mittels zur Benachrichtigung durch das Steuergerät geregelt wird. Dabei ist günstig, dass das Vergleichen sowie das Regeln der Benachrichtigung mit dem Steuergerät erfolgt und keine weiteren Komponenten benötigt werden.

In einer Ausführungsform des Verfahren ist vorgesehen, dass eine Intensität, insbesondere Ausprägung, Stärke und/oder Amplitude, der Benachrichtigung mittels des Mittels zur Benachrichtigung anhand der mittels der Sensorik erfassten aktuellen Betriebsparametern durch einen Vergleich des Steuergeräts mit in dem Steuergerät hinterlegten entsprechenden Grenzwerten für die erfassten aktuellen Betriebsparameter erfolgt. Vorteilhaft daran ist, dass die Intensität der Benachrichtigung an die jeweilige Fahrsituation anpassbar ist.

In einer bevorzugten Ausführungsform der Erfindung ermittelt die Sensorik beim Erfassen als aktuelle Betriebsparameter eine Fahrzeuggeschwindigkeit, einen Verzögerungswunsch des Fahrers, eine Motordrehzahl des Elektromotors, eine Raddrehzahl eines Rades des Kraftfahrzeugs und/oder einen Betriebs- bzw. Fahrmodus des Kraftfahrzeugs ermittelt. Diese Betriebsparameter sind besonders günstig hinsichtlich einer Beurteilung der Benachrichtigung.

Erfindungsgemäß wird ferner einer Vorrichtung zur Durchführung eines Verfahrens zur Benachrichtigung eines Fahrers eines einspurigen Kraftfahrzeugs gemäß der vorstehenden Offenbarung, mit wenigstens einem Elektromotor zum Antreiben und Verzögern einer Achse des Kraftfahrzeugs, einem Steuergerät zur Regelung des Elektromotors, einem Bremselement zum Erfassen eines Verzögerungswunsches des Fahrers an der Achse, einem Gasgriff oder Gaspedals zum Erfassen eines Beschleunigungswunsches des Fahrers an der Achse und einer Sensorik zum Erfassen von aktuellen Betriebsparametern. Dabei sind in dem Steuergerät Grenzwerte für den erfassten Verzögerungswunsch und/oder Beschleunigungswunsch und/oder der erfassten aktuellen Betriebsparameter hinterlegt. Ferner ist wenigstens ein Mittel zur Benachrichtigung des Fahrers vorgesehen ist und bei einem Erreichen und/oder einem Überschreiten eines der Grenzwerte ist der Fahrer benachrichtigbar.

Vorteilhaft daran ist, dass dem Fahrer ein Feedback über den Betriebszustand seiner E-Motor-Betriebsbremse zu erhalten, wodurch potentiell kritische Fahrsituationen verhindert werden können.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

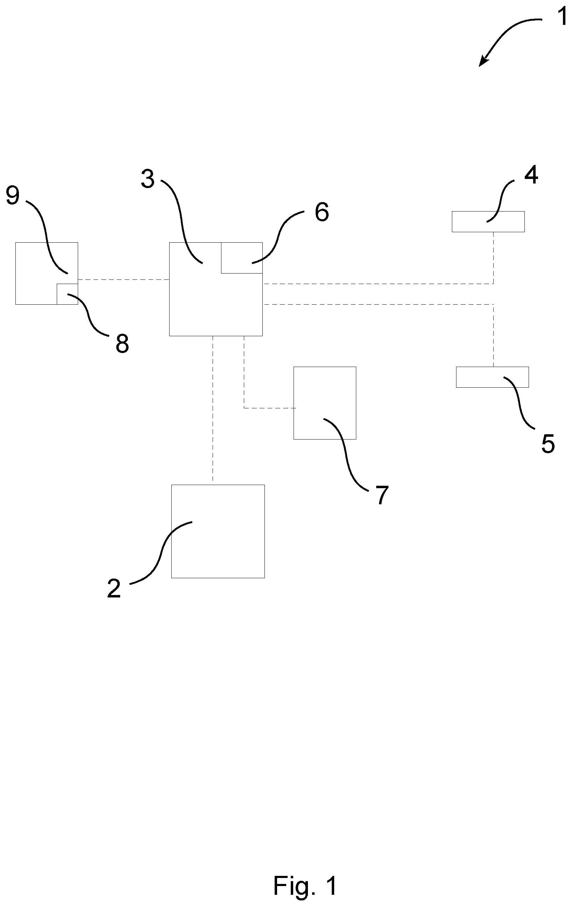

- Fig. 1: eine schematische Darstellung einer Vorrichtung zur Durchführung eines Verfahrens zur Benachrichtigung eines Fahrers eines Kraftfahrzeugs mit einem Elektromotor zum Antreiben und Verzögern einer Achse des Kraftfahrzeugs.

Die Figuren sind beispielhaft schematisch. Gleiche Bezugszeichen in den Figuren weisen auf gleiche funktionale und/oder strukturelle Merkmale hin.

In Figur 1 ist eine schematische Darstellung einer Vorrichtung 1 zur Durchführung eines Verfahrens zur Benachrichtigung eines Fahrers eines einspurigen Kraftfahrzeugs mit einem Elektromotor zum Antreiben und Verzögern einer Achse des einspurigen Kraftfahrzeugs dargestellt. Die Vorrichtung umfasst ferner ein Steuergerät 3 zur Regelung des Elektromotors 2, ein Bremselement zum Erfassen eines Verzögerungswunsches des Fahrers an der Achse, einen Gasgriff zum Erfassen eines Beschleunigungswunsches des Fahrers an der Achse und eine Sensorik zum Erfassen von aktuellen Betriebsparametern. Darüber hinaus sind in dem Steuergerät 3 Grenzwerte 6 für den erfassten Verzögerungswunsches und/oder Beschleunigungswunsches und/oder der erfassten aktuellen Betriebsparameter 8 hinterlegt. Außerdem ist wenigstens ein Mittel 7 zur Benachrichtigung des Fahrers vorgesehen und bei einem Erreichen und/oder einem Überschreiten eines der Grenzwerte 6 ist der Fahrer benachrichtigbar.

Bei der Durchführung des Verfahrens erfolgt zunächst ein kontinuierliches Erfassen eines Verzögerungswunsches des Fahrers an der Achse mittels eines Bremselements, eines Beschleunigungswunsches des Fahrers an der Achse mittels eines Gasgriffs und von aktuellen Betriebsparametern mittels einer Sensorik. Daraufhin wird ein Vergleichen des erfassten Verzögerungswunsches und/oder Beschleunigungswunsches und/oder der erfassten aktuellen Betriebsparameter mit in dem Steuergerät hinterlegten Grenzwertenmittels des Steuergeräts durchgeführt. Danach erfolgt ein Benachrichtigen des Fahrers bei einem Erreichen und/oder einem Überschreiten eines der Grenzwerte mittels wenigstens eines Mittels zur Benachrichtigung des Fahrers.

Die Sensorik 9 ist ausgebildet beim Erfassen als aktuelle Betriebsparameter 8 eine Fahrzeuggeschwindigkeit, einen Verzögerungswunsch des Fahrers, eine Motordrehzahl des Elektromotors 2, eine Raddrehzahl eines Rades des einspurigen Kraftfahrzeugs und/oder einen Betriebsmodus bzw. Fahrmodus des einspurigen Kraftfahrzeugs zu ermitteln.

Dabei ist ein Grenzwert 6 ein gleichzeitiges Betätigen des Bremselements 4 und des Gasgriffs 5. Weitere Grenzwerte 6 sind ein Betätigen des Bremselements 4 und eine Geschwindigkeit des einspurigen Kraftfahrzeugs größer 0; ein Betätigen des Bremselements 4 und eine Geschwindigkeit des einspurigen Kraftfahrzeugs von 0; eine Geschwindigkeit des einspurigen Kraftfahrzeugs größer 0 und ein derartiges Betätigen des Bremselements 4, dass ein Eingriff eines Antiblockiersystems des einspurigen Kraftfahrzeugs erfolgt; eine Geschwindigkeit des einspurigen Kraftfahrzeugs größer oder gleich 0 und ein derartiges Betätigen des Gasgriffs 5, dass ein Eingriff einer Antriebsschlupfregelung/dynamischen Traktionskontrolle (DTC) des einspurigen Kraftfahrzeugs erfolgt; sowie ein vorbestimmter Betriebspunkt, insbesondere ein Betriebspunkt mit einem maximalen Wirkungsgrad, des einspurigen Kraftfahrzeugs, welcher mittels des Steuergeräts 3 anhand der mittels der Sensorik 9 erfassten aktuellen Betriebsparametern 8 ermittelt wird, und ein Betätigen des Bremselements 4.

Ferner ist das Mittel 7 zur Benachrichtigung des Fahrers eine Drehmomentmodulation des Elektromotors 2 mittels des Steuergeräts 3; ein Vibrationsmotor oder ein Piezo-Element ist, welcher an dem Bremselement 4 angeordnet ist; ein akustisches Signal ist, welches durch eine entsprechend Regelung des Elektromotors 2 mittels des Steuergeräts 3 erzeugt wird; ein akustisches Signal ist, welches durch einen Lautsprecher des einspurigen Kraftfahrzeugs erzeugt wird; und/oder ein optisches Signal ist, welches durch eine Anzeige des einspurigen Kraftfahrzeugs erzeugt wird. Dabei ist das wenigstens eine Mittels 7 zur Benachrichtigung durch das Steuergerät 3 regelbar. Außerdem ist eine Intensität, insbesondere eine Ausprägung, Stärke und/oder Amplitude, der Benachrichtigung mittels des Mittels 7 zur Benachrichtigung anhand der mittels der Sensorik 9 erfassten aktuellen Betriebsparametern 8 durch einen Vergleich des Steuergeräts 3 mit in dem Steuergerät 3 hinterlegten entsprechenden Grenzwerten 6 für die erfassten aktuellen Betriebsparameter 8 regelbar.

Die Erfindung beschränkt sich in ihrer Ausführung nicht auf die vorstehend angegebenen bevorzugten Ausführungsbeispiele. Vielmehr ist eine Anzahl von Varianten denkbar, ohne dass dadurch der durch die Patentansprüche definierte Schutzbereich verlassen wird.

## Patentansprüche

1. Verfahren zur Benachrichtigung eines Fahrers eines einspurigen Kraftfahrzeugs mit wenigstens einem Elektromotor (2) zum Antreiben und Verzögern einer Achse des Kraftfahrzeugs und einem Steuergerät (3) zur Regelung des Elektromotors (2), welches die Schritte umfasst:
a. Kontinuierliches Erfassen eines Verzögerungswunsches des Fahrers zur Betätigung einer E-Motor-Betriebsbremse des Elektromotors (2) an der Achse mittels eines Bremselements (4), eines Beschleunigungswunsches des Fahrers an der Achse mittels eines Gasgriffs oder Gaspedals (5) und von aktuellen Betriebsparametern (8) mittels einer Sensorik (9),
b. Vergleichen des erfassten Verzögerungswunsches und/oder Beschleunigungswunsches und/oder der erfassten aktuellen Betriebsparameter (8) mit in dem Steuergerät (3) hinterlegten Grenzwerten (6) mittels des Steuergeräts (3),
c. Benachrichtigen des Fahrers bei einem Erreichen und/oder einem Überschreiten eines der Grenzwerte (6) mittels wenigstens eines Mittels (7) zur Benachrichtigung des Fahrers,
**dadurch gekennzeichnet, dass** ein Grenzwert (6) ein gleichzeitiges Betätigen des Bremselements (4) und des Gasgriffs oder Gaspedals (5) ist, wobei der Fahrer bei einem Erreichen des Grenzwerts (6) mittels des wenigstens einen Mittels (7) zur Benachrichtigung benachrichtigt wird.

2. Verfahren gemäß Anspruch 1, wobei die Sensorik (9) eine Geschwindigkeit des Kraftfahrzeugs erfasst, wobei ein Grenzwert (6) ein Betätigen des Bremselements (4) und eine Geschwindigkeit des Kraftfahrzeugs größer 0 ist, wobei der Fahrer bei einem Erreichen des Grenzwerts (6) mittels des wenigstens einen Mittels (7) zur Benachrichtigung benachrichtigt wird.

3. Verfahren gemäß einem der Ansprüche 1 oder 2, wobei die Sensorik (9) eine Geschwindigkeit des Kraftfahrzeugs erfasst, wobei ein Grenzwert (6) ein Betätigen des Bremselements (4) und eine Geschwindigkeit des Kraftfahrzeugs von 0 ist, wobei der Fahrer bei einem Erreichen des Grenzwerts (6) mittels des wenigstens einen Mittels (7) zur Benachrichtigung benachrichtigt wird.

4. Verfahren gemäß einem der vorhergehenden Ansprüche, wobei die Sensorik (9) eine Geschwindigkeit des Kraftfahrzeugs erfasst, wobei ein Grenzwert (6) eine Geschwindigkeit des Kraftfahrzeugs größer 0 und ein derartiges Betätigen des Bremselements (4) ist, dass ein Eingriff eines Antiblockiersystems des Kraftfahrzeugs erfolgt, wobei der Fahrer bei einem Erreichen oder einem Überschreiten des Grenzwerts (6) mittels des wenigstens einen Mittels (7) zur Benachrichtigung benachrichtigt wird.

5. Verfahren gemäß einem der vorhergehenden Ansprüche, wobei die Sensorik (9) eine Geschwindigkeit des Kraftfahrzeugs erfasst, wobei ein Grenzwert (6) eine Geschwindigkeit des Kraftfahrzeugs größer oder gleich 0 und ein derartiges Betätigen des Gasgriffs oder Gaspedals (5) ist, dass ein Eingriff einer Antriebsschlupfregelung/dynamischen Traktionskontrolle (DTC) des Kraftfahrzeugs erfolgt, wobei der Fahrer bei einem Erreichen oder einem Überschreiten des Grenzwerts (6) mittels des wenigstens einen Mittels (7) zur Benachrichtigung benachrichtigt wird.

6. Verfahren gemäß einem der vorhergehenden Ansprüche, wobei ein Grenzwert (6) ein vorbestimmter Betriebspunkt, insbesondere ein Betriebspunkt mit einem maximalen Wirkungsgrad, des Kraftfahrzeugs ist, welcher mittels des Steuergeräts (3) anhand der mittels der Sensorik (9) erfassten aktuellen Betriebsparametern (8) ermittelt wird, und ein Betätigen des Bremselements (4) ist, wobei der Fahrer bei einem Erreichen des Grenzwerts (6) mittels des wenigstens einen Mittels (7) zur Benachrichtigung benachrichtigt wird.

7. Verfahren gemäß einem der vorhergehenden Ansprüche, wobei das Mittel (7) zur Benachrichtigung des Fahrers eine Drehmomentmodulation des Elektromotors (2) mittels des Steuergeräts (3) ist und beim Benachrichtigen eine Schwingung und/oder Vibration des Kraftfahrzeugs erzeugt wird.

8. Verfahren gemäß einem der vorhergehenden Ansprüche, wobei das Mittel (7) zur Benachrichtigung des Fahrers ein Aktor zur Erzeugung eines haptischen Signals, insbesondere ein Vibrationsmotor oder ein Piezo-Element, ist, welcher an dem Bremselement (4) oder einem Lenkelement des Kraftfahrzeugs oder einem Sitzelement des Kraftfahrzeugs angeordnet ist, und beim Benachrichtigen eine Vibration des Bremselements (4) erzeugt wird.

9. Verfahren gemäß einem der vorhergehenden Ansprüche, wobei das Mittel (7) zur Benachrichtigung des Fahrers ein akustisches Signal ist, welches durch eine entsprechend Regelung des Elektromotors (2) mittels des Steuergeräts (3) erzeugt wird, und beim Benachrichtigen das akustische Signal erzeugt wird.

10. Verfahren gemäß einem der vorhergehenden Ansprüche, wobei das Mittel (7) zur Benachrichtigung des Fahrers ein akustisches Signal ist, welches durch einen Lautsprecher des Kraftfahrzeugs erzeugt wird, und beim Benachrichtigen das akustische Signal erzeugt wird.

11. Verfahren gemäß einem der vorhergehenden Ansprüche, wobei das Mittel (7) zur Benachrichtigung des Fahrers ein optisches Signal ist, welches durch eine Anzeige des Kraftfahrzeugs erzeugt wird, und beim Benachrichtigen das optische Signal erzeugt wird.

12. Verfahren gemäß einem der vorhergehenden Ansprüche, wobei das Benachrichtigen mittels des wenigstens einen Mittels (7) zur Benachrichtigung durch das Steuergerät (3) geregelt wird.

13. Verfahren gemäß dem vorhergehenden Anspruch, wobei eine Intensität, insbesondere Ausprägung, Stärke und/oder Amplitude, der Benachrichtigung mittels des Mittels (7) zur Benachrichtigung anhand der mittels der Sensorik (9) erfassten aktuellen Betriebsparametern (8) durch einen Vergleich des Steuergeräts (3) mit in dem Steuergerät (3) hinterlegten entsprechenden Grenzwerten (6) für die erfassten aktuellen Betriebsparameter (8) erfolgt.

14. Verfahren gemäß dem vorhergehenden Anspruch, wobei die Sensorik (9) beim Erfassen als aktuelle Betriebsparameter (8) eine Fahrzeuggeschwindigkeit, einen Verzögerungswunsch des Fahrers, eine Motordrehzahl des Elektromotors (2), eine Raddrehzahl eines Rades des Kraftfahrzeugs und/oder einen Betriebs-/Fahrmodus des Kraftfahrzeugs ermittelt.

15. Vorrichtung zur Durchführung eines Verfahrens zur Benachrichtigung eines Fahrers eines einspurigen Kraftfahrzeugs gemäß einem der vorhergehenden Ansprüche mit wenigstens einem Elektromotor (2) zum Antreiben und Verzögern einer Achse des Kraftfahrzeugs, einem Steuergerät (3) zur Regelung des Elektromotors (2), einem Bremselement (4) zum Erfassen eines Verzögerungswunsches des Fahrers zur Betätigung einer E-Motor-Betriebsbremse des Elektromotors (2) an der Achse, einem Gasgriff oder Gaspedal (5) zum Erfassen eines Beschleunigungswunsches des Fahrers an der Achse und einer Sensorik (9) zum Erfassen von aktuellen Betriebsparametern (8), **dadurch gekennzeichnet, dass** in dem Steuergerät (3) Grenzwerte (6) für den erfassten Verzögerungswunsch und/oder Beschleunigungswunsch und/oder der erfassten aktuellen Betriebsparameter (8) hinterlegt sind, wobei wenigstens ein Mittel (7) zur Benachrichtigung des Fahrers vorgesehen ist und bei einem Erreichen und/oder einem Überschreiten eines der Grenzwerte (6) der Fahrer benachrichtigbar ist.

## Claims

1. Method for notifying a driver of a single-track motor vehicle with at least one electric motor (2) for driving and decelerating an axle of the motor vehicle and a control unit (3) for controlling the electric motor (2), which comprises the steps:
a. Continuously detecting a deceleration request of the driver for actuating an electric motor service brake of the electric motor (2) at the axle by means of a braking element (4), an acceleration request of the driver at the axle by means of a throttle grip or accelerator pedal (5) and current operating parameters (8) by means of a sensor system (9),
b. Comparing the detected deceleration request and/or acceleration request and/or the detected current operating parameters (8) with limit values (6) stored in the control unit (3) by means of the control unit (3),
c. Notifying the driver upon reaching and/or exceeding one of the limit values (6) by means of at least one means (7) for notifying the driver,
**characterized in that** a limit value (6) is a simultaneous actuation of the braking element (4) and the throttle grip or accelerator pedal (5), wherein the driver is notified upon reaching the limit value (6) by means of the at least one means (7) for notification.

2. Method according to claim 1, wherein the sensor system (9) detects a speed of the motor vehicle, wherein a limit value (6) is an actuation of the braking element (4) and a speed of the motor vehicle greater than 0, wherein the driver is notified upon reaching the limit value (6) by means of the at least one means (7) for notification.

3. Method according to one of claims 1 or 2, wherein the sensor system (9) detects a speed of the motor vehicle, wherein a limit value (6) is an actuation of the braking element (4) and a speed of the motor vehicle of 0, wherein the driver is notified upon reaching the limit value (6) by means of the at least one means (7) for notification.

4. Method according to one of the preceding claims, wherein the sensor system (9) detects a speed of the motor vehicle, wherein a limit value (6) is a speed of the motor vehicle greater than 0 and such an actuation of the braking element (4) that an intervention of an anti-lock braking system of the motor vehicle occurs, wherein the driver is notified upon reaching or exceeding the limit value (6) by means of the at least one means (7) for notification.

5. Method according to one of the preceding claims, wherein the sensor system (9) detects a speed of the motor vehicle, wherein a limit value (6) is a speed of the motor vehicle greater than or equal to 0 and such an actuation of the throttle grip or accelerator pedal (5) that an intervention of a traction control system/dynamic traction control (DTC) of the motor vehicle occurs, wherein the driver is notified upon reaching or exceeding the limit value (6) by means of the at least one means (7) for notification.

6. Method according to one of the preceding claims, wherein a limit value (6) is a predetermined operating point, in particular an operating point with a maximum efficiency, of the motor vehicle, which is determined by means of the control unit (3) on the basis of the current operating parameters (8) detected by means of the sensor system (9), and is an actuation of the braking element (4), wherein the driver is notified upon reaching the limit value (6) by means of the at least one means (7) for notification.

7. Method according to one of the preceding claims, wherein the means (7) for notifying the driver is a torque modulation of the electric motor (2) by means of the control unit (3) and upon notifying an oscillation and/or vibration of the motor vehicle is generated.

8. Method according to one of the preceding claims, wherein the means (7) for notifying the driver is an actuator for generating a haptic signal, in particular a vibration motor or a piezo element, which is arranged on the braking element (4) or a steering element of the motor vehicle or a seat element of the motor vehicle, and upon notifying a vibration of the braking element (4) is generated.

9. Method according to one of the preceding claims, wherein the means (7) for notifying the driver is an acoustic signal, which is generated by a corresponding control of the electric motor (2) by means of the control unit (3), and upon notifying the acoustic signal is generated.

10. Method according to one of the preceding claims, wherein the means (7) for notifying the driver is an acoustic signal, which is generated by a loudspeaker of the motor vehicle, and upon notifying the acoustic signal is generated.

11. Method according to one of the preceding claims, wherein the means (7) for notifying the driver is an optical signal, which is generated by a display of the motor vehicle, and upon notifying the optical signal is generated.

12. Method according to one of the preceding claims, wherein the notifying by means of the at least one means (7) for notification is controlled by the control unit (3).

13. Method according to the preceding claim, wherein an intensity, in particular expression, strength and/or amplitude, of the notification by means of the means (7) for notification is carried out on the basis of the current operating parameters (8) detected by means of the sensor system (9) by a comparison of the control unit (3) with corresponding limit values (6) stored in the control unit (3) for the detected current operating parameters (8).

14. Method according to the preceding claim, wherein the sensor system (9) during detecting as current operating parameters (8) determines a vehicle speed, a deceleration request of the driver, an engine speed of the electric motor (2), a wheel speed of a wheel of the motor vehicle and/or an operating/driving mode of the motor vehicle.

15. Device for carrying out a method for notifying a driver of a single-track motor vehicle according to one of the preceding claims with at least one electric motor (2) for driving and decelerating an axle of the motor vehicle, a control unit (3) for controlling the electric motor (2), a braking element (4) for detecting a deceleration request of the driver for actuating an electric motor service brake of the electric motor (2) at the axle, a throttle grip or accelerator pedal (5) for detecting an acceleration request of the driver at the axle and a sensor system (9) for detecting current operating parameters (8), **characterized in that** limit values (6) for the detected deceleration request and/or acceleration request and/or the detected current operating parameters (8) are stored in the control unit (3), wherein at least one means (7) for notifying the driver is provided and upon reaching and/or exceeding one of the limit values (6) the driver is notifiable.

## Revendications

1. Procédé de notification d'un conducteur d'un véhicule à moteur monovoie avec au moins un moteur électrique (2) pour entraîner et ralentir un essieu du véhicule à moteur et un dispositif de commande (3) pour réguler le moteur électrique (2), qui comprend les étapes:
a. Détection continue d'une demande de ralentissement du conducteur pour actionner un frein de service à moteur électrique du moteur électrique (2) au niveau de l'essieu au moyen d'un élément de freinage (4), d'une demande d'accélération du conducteur au niveau de l'essieu au moyen d'une poignée des gaz ou d'une pédale d'accélérateur (5) et de paramètres de fonctionnement actuels (8) au moyen d'un système de capteurs (9),
b. Comparaison de la demande de ralentissement détectée et/ou de la demande d'accélération détectée et/ou des paramètres de fonctionnement actuels détectés (8) avec des valeurs limites (6) enregistrées dans le dispositif de commande (3) au moyen du dispositif de commande (3),
c. Notification du conducteur lors de l'atteinte et/ou du dépassement d'une des valeurs limites (6) au moyen d'au moins un moyen (7) pour notifier le conducteur,
**caractérisé en ce qu'**une valeur limite (6) est un actionnement simultané de l'élément de freinage (4) et de la poignée des gaz ou de la pédale d'accélérateur (5), le conducteur étant notifié lors de l'atteinte de la valeur limite (6) au moyen dudit au moins un moyen (7) de notification.

2. Procédé selon la revendication 1, dans lequel le système de capteurs (9) détecte une vitesse du véhicule à moteur, une valeur limite (6) étant un actionnement de l'élément de freinage (4) et une vitesse du véhicule à moteur supérieure à 0, le conducteur étant notifié lors de l'atteinte de la valeur limite (6) au moyen dudit au moins un moyen (7) de notification.

3. Procédé selon l'une des revendications 1 ou 2, dans lequel le système de capteurs (9) détecte une vitesse du véhicule à moteur, une valeur limite (6) étant un actionnement de l'élément de freinage (4) et une vitesse du véhicule à moteur de 0, le conducteur étant notifié lors de l'atteinte de la valeur limite (6) au moyen dudit au moins un moyen (7) de notification.

4. Procédé selon l'une des revendications précédentes, dans lequel le système de capteurs (9) détecte une vitesse du véhicule à moteur, une valeur limite (6) étant une vitesse du véhicule à moteur supérieure à 0 et un actionnement de l'élément de freinage (4) tel qu'une intervention d'un système antiblocage du véhicule à moteur se produit, le conducteur étant notifié lors de l'atteinte ou du dépassement de la valeur limite (6) au moyen dudit au moins un moyen (7) de notification.

5. Procédé selon l'une des revendications précédentes, dans lequel le système de capteurs (9) détecte une vitesse du véhicule à moteur, une valeur limite (6) étant une vitesse du véhicule à moteur supérieure ou égale à 0 et un actionnement de la poignée des gaz ou de la pédale d'accélérateur (5) tel qu'une intervention d'un système de contrôle de la traction/contrôle dynamique de traction (DTC) du véhicule à moteur se produit, le conducteur étant notifié lors de l'atteinte ou du dépassement de la valeur limite (6) au moyen dudit au moins un moyen (7) de notification.

6. Procédé selon l'une des revendications précédentes, dans lequel une valeur limite (6) est un point de fonctionnement prédéterminé, en particulier un point de fonctionnement avec un rendement maximal, du véhicule à moteur, qui est déterminé au moyen du dispositif de commande (3) sur la base des paramètres de fonctionnement actuels (8) détectés au moyen du système de capteurs (9), et est un actionnement de l'élément de freinage (4), le conducteur étant notifié lors de l'atteinte de la valeur limite (6) au moyen dudit au moins un moyen (7) de notification.

7. Procédé selon l'une des revendications précédentes, dans lequel le moyen (7) pour notifier le conducteur est une modulation de couple du moteur électrique (2) au moyen du dispositif de commande (3) et lors de la notification une oscillation et/ou vibration du véhicule à moteur est générée.

8. Procédé selon l'une des revendications précédentes, dans lequel le moyen (7) pour notifier le conducteur est un actionneur pour générer un signal haptique, en particulier un moteur à vibration ou un élément piézo, qui est disposé sur l'élément de freinage (4) ou un élément de direction du véhicule à moteur ou un élément de siège du véhicule à moteur, et lors de la notification une vibration de l'élément de freinage (4) est générée.

9. Procédé selon l'une des revendications précédentes, dans lequel le moyen (7) pour notifier le conducteur est un signal acoustique, qui est généré par une régulation correspondante du moteur électrique (2) au moyen du dispositif de commande (3), et lors de la notification le signal acoustique est généré.

10. Procédé selon l'une des revendications précédentes, dans lequel le moyen (7) pour notifier le conducteur est un signal acoustique, qui est généré par un haut-parleur du véhicule à moteur, et lors de la notification le signal acoustique est généré.

11. Procédé selon l'une des revendications précédentes, dans lequel le moyen (7) pour notifier le conducteur est un signal optique, qui est généré par un affichage du véhicule à moteur, et lors de la notification le signal optique est généré.

12. Procédé selon l'une des revendications précédentes, dans lequel la notification au moyen dudit au moins un moyen (7) de notification est régulée par le dispositif de commande (3).

13. Procédé selon la revendication précédente, dans lequel une intensité, en particulier expression, force et/ou amplitude, de la notification au moyen du moyen (7) de notification est effectuée sur la base des paramètres de fonctionnement actuels (8) détectés au moyen du système de capteurs (9) par une comparaison du dispositif de commande (3) avec des valeurs limites correspondantes (6) enregistrées dans le dispositif de commande (3) pour les paramètres de fonctionnement actuels détectés (8).

14. Procédé selon la revendication précédente, dans lequel le système de capteurs (9) lors de la détection en tant que paramètres de fonctionnement actuels (8) détermine une vitesse du véhicule, une demande de ralentissement du conducteur, une vitesse de rotation du moteur électrique (2), une vitesse de rotation d'une roue du véhicule à moteur et/ou un mode de fonctionnement/conduite du véhicule à moteur.

15. Dispositif pour réaliser un procédé de notification d'un conducteur d'un véhicule à moteur monovoie selon l'une des revendications précédentes avec au moins un moteur électrique (2) pour entraîner et ralentir un essieu du véhicule à moteur, un dispositif de commande (3) pour réguler le moteur électrique (2), un élément de freinage (4) pour détecter une demande de ralentissement du conducteur pour actionner un frein de service à moteur électrique du moteur électrique (2) au niveau de l'essieu, une poignée des gaz ou une pédale d'accélérateur (5) pour détecter une demande d'accélération du conducteur au niveau de l'essieu et un système de capteurs (9) pour détecter des paramètres de fonctionnement actuels (8), **caractérisé en ce que** des valeurs limites (6) pour la demande de ralentissement détectée et/ou la demande d'accélération détectée et/ou les paramètres de fonctionnement actuels détectés (8) sont enregistrées dans le dispositif de commande (3), au moins un moyen (7) pour notifier le conducteur étant prévu et lors de l'atteinte et/ou du dépassement d'une des valeurs limites (6) le conducteur étant notifiable.
